# EUROPÄISCHE PATENTSCHRIFT

(11) **EP 2 016 818 B1**
(45) Veröffentlichungstag und Bekanntmachung des Hinweises auf die Patenterteilung: **04.05.2016**
(21) Anmeldenummer: 08012083.5
(22) Anmeldetag: 04.07.2008
(51) Int. Cl.: A01B 63/10, A01B 63/112

(54) **Hubwerk und Verfahren zum Ansteuern eines derartigen Hubwerks**
Hoisting gear and method for operating such a hoisting gear
Dispositif de levage et procédé de commande d'un tel dispositif de levage

(30) Priorität: 19.07.2007 DE 102007033978; 27.08.2007 DE 102007040344
(43) Veröffentlichungstag der Anmeldung: 21.01.2009
(73) Patentinhaber: Robert Bosch GmbH, 70184 Stuttgart (DE)
(72) Erfinder: Sönke, Jessen, 71732 Tamm (DE); Stachnik, Peter, 71706 Markgröningen (DE)
(74) Vertreter: Thürer, Andreas

(56) Entgegenhaltungen:
- EP-A- 1 403 102
- AT-U1- 8 986
- DE-A1-102004 033 315
- DE-A1-102006 038 801

## Beschreibung

Die Erfindung betrifft ein Hubwerk gemäß dem Oberbegriff des Patentanspruchs 1 und ein Verfahren zum Ansteuern eines Hubwerks.

Moderne Traktoren übernehmen neben ihrer herkömmlichen Aufgabe als Zugmaschine auch die Energieversorgung und Steuerung von an ein Hubwerk angehängten oder aufgesattelten Geräten. Diese letztgenannte Funktion wird zum einen von einer Zapfwelle des Traktors oder von der Arbeitshydraulik wahrgenommen. Bei Traktoren der mittleren und oberen Leistungsklasse kommen bei der Arbeitshydraulik zunehmend elektrisch ansteuerbare Wegeventile für die Steuerung der Arbeitsfunktionen der Anbaugeräte zum Einsatz. Die Steuerung dieser hydraulischen Funktionen erfolgt üblicher Weise über einen sehr kompakten Steuerblock, bei dem die Steuerung mit allen wesentlichen Wege- und Regelventilen zu einer Einheit zusammengefasst ist. Ein derartiger, für die so genannte elektrohydraulische Hubwerksregelung (EHR) geeigneter Steuerblock ist beispielsweise in der DE 10 2004 033 315 A1 oder im Datenblatt RD 66 125/09.04 (EHR-Ventile) der Bosch Rexroth AG beschrieben.

Die bei bekannten Traktoren verwendeten Heckhubwerke haben am Traktorfahrgestell angelenkte Unterlenker, an deren Endabschnitte das Anbaugerät angesetzt wird. Die Verstellung der Unterlenker erfolgt über Hubzylinder, die über die EHR-Steuerblöcke verstellbar sind. Zur Einstellung der Neigung des Anbaugerätes kann das Hubwerk zusätzlich mit einem hydraulisch verstellbarem Oberlenker versehen sein, dessen Länge ebenfalls hydraulisch verstellbar ist. Derartige Hubwerke sind beispielsweise in der DE 603 03 482 T2 oder der DE 103 50 651 B3 beschrieben.

Bei der letztgenannten Lösung werden im so genannten Teach-In-Verfahren die Solllängen des Oberlenkers bei der Verstellung des Hubwerks eingegeben und dann während der Hubwerksregelung geregelt, so dass der Oberlenker eine von der jeweiligen Hubwerksposition abhängige Solllänge einnimmt und das Anbaugerät somit beispielsweise im Steilaushub oder im Parallelaushub anhebbar oder in einer davon abweichenden Bahnkurve absenkbar ist. Es zeigte sich, dass eine derartige Längenregelung des Oberlenkers bei bestimmten Betriebsbedingungen nicht hinreichend ist. Zudem ist die Programmierung im Teach-In-Verfahren relativ aufwendig, wobei ein erheblicher Aufwand erforderlich ist, um die abgelegte Bahnkurve an leicht geänderte Betriebsbedingungen anzupassen.

Bei dem in der DE 603 03 482 T2 beschriebenen Hubwerk kann die Verstellung in Abhängigkeit vom Druck oder von der Länge des Oberlenkers erfolgen, wobei über Druckaufnehmer die Drücke in den Zuleitungen zu Druckräumen eines zur Verstellung des Oberlenkers verwendeten Hydrozylinders und dessen Kolbenweg über geeignete Sensoren erfasst und über eine Steuereinheit ausgewertet werden. Bei dieser bekannten Lösung erfolgt auch die Verstellung der Unterlenker über eine Längen- und/oder Druckregelung, so dass sowohl der regelungstechnische als auch der vorrichtungstechnische Aufwand erheblich ist.

Bei dieser bekannten Lösung kann durch die Druckregelung des hydraulischen Oberlenkers die Achslast am Traktor und am angehängten/aufgesattelten Gerät variiert werden, indem über den Oberlenker am Gerät gezogen oder gedrückt wird. Die Ansteuerung des hydraulischen Oberlenkers erfolgt über vier stetig verstellbare 2-Wegeventile, die jeweils in eine Schließstellung verstellbar sind, in der der Druckmittelströmungspfad zwischen den stetig verstellbaren Wegeventilen und dem Oberlenker abgesperrt ist. Nachteilig bei dieser Lösung ist, dass beim Einspannen des Oberlenkers in den Verbindungsleitungen zu den Wegeventilen vergleichsweise hohe Drücke anliegen, so dass es beispielsweise bei einem Leitungsbruch zu einem schlagartigen Verstellen des Oberlenkers und somit zu einer ungewollten Bewegung des Geräts kommen kann.

Aus der AT 008 986 U1 ist ein hydraulisches System mit einem Arbeitszylinder, der zwei Druckräume aufweist, und einer Pumpeneinheit bekannt, wobei in den Verbindungsleitungen zwischen der Pumpeneinheit und den Druckräumen des Arbeitszylinders durch den Druck in der jeweils anderen Leitung entsperrbare Rückschlagventile vorgesehen sind.

Der Erfindung liegt die Aufgabe zugrunde, ein Hubwerk und ein Verfahren zum Ansteuern eines Hubwerks zu schaffen, mit dem die Betriebssicherheit des Hubwerks verbessert ist.

Diese Aufgabe wird durch ein Hubwerk mit den Merkmalen des Patentanspruches 1 und ein Verfahren mit den Merkmalen des nebengeordneten Patentanspruches 10 gelöst.

Erfindungsgemäß hat das Hubwerk eine elektrohydraulisch verstellbare Unterlenkeranordnung und zumindest einen druckgeregelt verstellbaren Oberlenker, dessen Druckräume über eine stetig verstellbare Wegeventilanordnung mit einer Pumpe oder einem Tank verbindbar sind. Der Oberlenker ist mit einem Sperrblock versehen, der jeweils einem Druckraum des Oberlenkers zugeordnete entsperrbare Sperrventile hat, so dass eine leckagefreie Einspannung des Oberlenkers ermöglicht ist. Die zur Druckregelung erforderlichen Druckaufnehmer zum Erfassen des Drucks im jeweiligen Druckraum sind im Druckmittelströmungspfad zwischen den Oberlenker-Druckräumen und der Wegeventilanordnung angeordnet.

Eine derartige Lösung ermöglicht die weitestgehend leckagefreie Einspannung des Oberlenkers, wobei aufgrund des direkten Anbaus des Sperrblocks an den Oberlenker auch bei einem Leitungsbruch keine schlagartige Veränderung der Oberlenkerlänge zu befürchten ist.

Bei einem bevorzugten Ausführungsbeispiel erfolgt die Ansteuerung des Oberlenkers über ein einziges Proportionalventil, über das die beiden Druckräume mit dem Tank oder mit der Pumpe verbindbar sind.

Bei einem Ausführungsbeispiel der Erfindung sind die Druckaufnehmer im Druckmittelströmungspfad zwischen dem Sperrblock und den Druckräumen angeordnet. D.h. bei dieser Lösung werden die Druckaufnehmer in die Oberlenkerkonstruktion integriert; man nimmt dabei in Kauf, dass diese Druckaufnehmer aufgrund der Anbringung am Oberlenker relativ exponiert liegen und somit gegen äußere Beschädigung geschützt werden müssen. Dieser Nachteil wird jedoch vom Vorteil überwogen, dass der Druck in den Druckräumen sehr exakt mit geringer Zeitverzögerung auch bei eingespanntem Oberlenker erfassbar ist.

Bei einer alternativen Lösung werden die Sperrventile des Sperrblocks jeweils durch eine Bypassleitung mit einer Drossel umgangen, wobei diese Elemente vorzugsweise in den Sperrblock integriert sind. D.h. über diese Bypassleitung wird bewusst ein geringer Steuerölvolumenstrom auch bei eingespanntem Oberlenker über die Bypassleitungen zugelassen, so dass nach einer vorbestimmten Druckausgleichzeit der Druck in den Zuleitungen zum Oberlenker dem Druck in den Druckräumen des Oberlenkers entspricht. Bei dieser Variante müssen dann in den Leitungen geeignete Sperrventile zum leckölfreien Einspannen des Oberlenkers vorgesehen werden, da durch den Steuerölvolumenstrom über die Bypassleitung der Oberlenker langsam in Abhängigkeit von der anliegenden Last verstellt wird. Im Unterschied zum eingangs beschriebenen Stand der Technik erfolgt diese Verstellung jedoch auch bei einem Leitungsbruch nicht schlagartig, sondern sehr langsam, so dass eine Beschädigung des Hubwerks oder eine Verletzung von Personen nahezu ausgeschlossen ist.

Als zusätzliche Sperrventile werden vorzugsweise Senkenmodule verwendet, die in die Wegeventilanordnung integriert sind.

Bei einer bevorzugten Lösung ist der Regelkreis des Oberlenkers derart ausgelegt, dass auch eine Längenregelung ermöglicht ist. In diesem Fall wird der Oberlenker mit einem Wegsensor zum Erfassen der Oberlenkerlänge versehen.

Das Proportionalventil zur Ansteuerung des Oberlenkers ist vorzugsweise als LS-Wegeventil eines Steuerblocks ausgeführt.

Bei der zuletzt genannten Ausführungsform mit einer Umgehung der Sperrventile mit jeweils einer Bypassleitung und einer darin angeordneten Drossel und zusätzlichen Sperrventilen im Bereich des Wegeventils kann ein intermittierendes Druckregelverfahren gemäß dem nebengeordneten Patentanspruch 10 verwendet werden. Demgemäß wird bei stehendem Oberlenker der Druck über die Druckaufnehmer erfasst und daraus und in Abhängigkeit von der Lastrichtung (ziehende, drückende Last, Oberlenker verlängern/verkürzen) eine Soll-Oberlenkerlänge berechnet, bei der sich am Oberlenker der gewünschte Solldruck einstellt. In einem anschließenden Verfahrensschritt wird die Oberlenkerlänge auf diese Solllänge eingestellt und der Oberlenker angehalten und anschließend wiederum der Druck am Oberlenker erfasst und daraus eine neue Soll-Oberlenkerlänge berechnet, wobei in diese Berechnung der nunmehr gemessene Ist-Druck und - gewichtet - die zuvor berechnete "alte" Soll-Oberlenkerlänge eingeht. Dieser Zyklus wird so lange wiederholt bis der Solldruck am Oberlenker erreicht ist.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Prinzipdarstellung einer Arbeitshydraulik eines Traktors;
Figur 2 einen Hydraulikschaltplan einer Oberlenkeranordnung des Traktors aus Figur 1;
Figur 3 ein Bedienfeld zur Ansteuerung des Oberlenkers;
Figur 4 ein stark vereinfachtes Ablaufdiagramm zur Erläuterung einer Bedienstrategie für den Oberlenker;
Figur 5 einen Hydraulikschaltplan eines weiteren Ausführungsbeispiels einer Oberlenkeranordnung und
Figur 6 ein Ablaufschema einer Bypass-Steuerung für die Oberlenkeranordnung aus Figur 5.

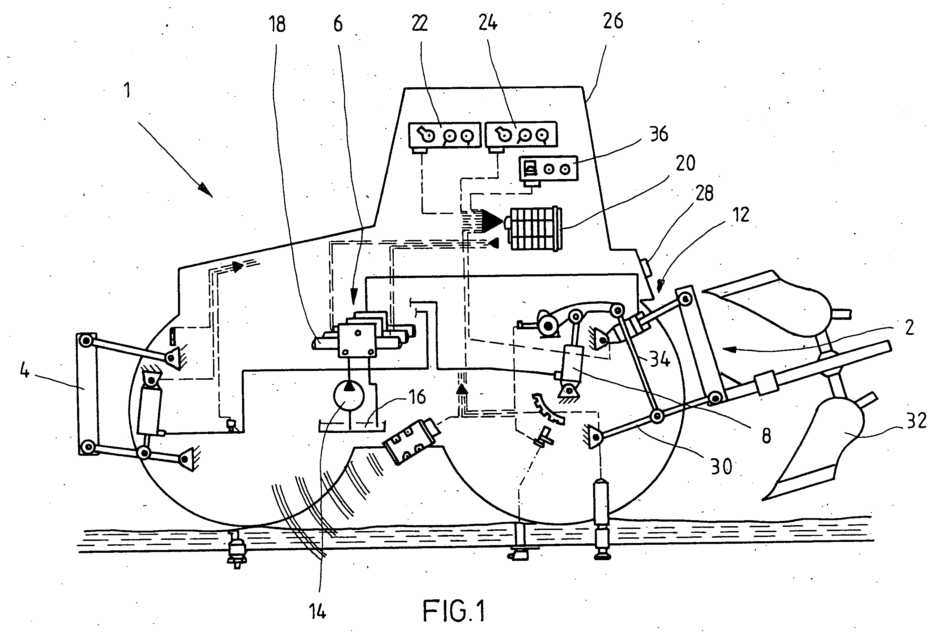

Anhand Figur 1 wird der Grundaufbau einer Arbeitshydraulik eines Traktors 1 erläutert. Dieser hat ein Heckhubwerk 2 und ggf. ein Fronthubwerk 4, die beide hydraulisch betätigt sind. Die Druckmittelversorgung erfolgt über einen Mobilsteuerblock der eingangs beschriebenen Bauart, über den Hubzylinder 8, 10 der beiden Hubwerke 2, 4 und ein Oberlenkerzylinder 12 mit einer Hydropumpe 14 oder einem Tank 16 verbindbar sind. Beim dargestellten Ausführungsbeispiel sind die beiden Hubzylinder 8, 10 einfach wirkend dargestellt, die bei Druckmittelzufuhr ausgefahren werden und aufgrund des Gewichts des Hubwerks und des Anbau-/Aufsattelgerätes wieder abgesenkt werden. Anstelle dieser einfach wirkenden Hubzylinder 8, 10 können selbstverständlich auch doppelt wirkende Hubzylinder verwendet werden, die auch im Arbeitsbereich "Drücken" betrieben werden können, bei denen beispielsweise ein aktives Pflugeinziehen ermöglicht ist. Dieser Betriebszustand kann zum Beispiel auch verwendet werden, um den Traktor zum Wechsel der hinteren, großen Räder rückseitig anzuheben.

Der Steuerblock 6 enthält jedem hydraulischen Verbraucher des Traktors zugeordnete Wegeventile 18, die über ein Steuergerät 20 ansteuerbar sind. Die Sollwerte zur Betätigung der Hubzylinder 8, 10 werden beispielsweise über ein Frontbedienteil 22 und ein Heckbedienteil 24 eingegeben, die im inneren der Traktorkabine 26 angeordnet sind oder über front- bzw. rückseitig am Traktor angeordnete Taster 28 eingestellt werden.

Zur Erfassung der auftretenden Kräfte, Drücke, Geschwindigkeiten und Hubwerkspositionen sind am Traktor 1 noch eine Vielzahl von Sensoren, beispielsweise Drucksensoren, Drehzahlsensoren, Lagesensoren, Kraftsensoren oder Geschwindigkeitssensoren vorgesehen, deren Signale über das Steuergerät 16 verarbeitet werden.

Die beiden Hubwerke 2, 4 sind in Figur 1 sehr vereinfacht dargestellt, hinsichtlich des konkreten konstruktiven Aufbaus derartiger Hubwerke sei zur Vermeidung von Wiederholungen auf den eingangs beschriebenen Stand der Technik verwiesen. Ein herkömmliches Heckhubwerk 2 hat üblicher Weise zwei Unterlenker 30, die jeweils einerseits am Traktorfahrgestell angelenkt sind und andererseits ein Anbaugerät, beispielsweise einen Pflug 32 abstützen. Die Betätigung der Unterlenker 30 zum Anheben und Absenken des Pflugs 32 erfolgt über den Hubzylinder 8, oder eine Hubzylinderanordnung, die direkt oder - wie beim dargestellten Ausführungsbeispiel gezeigt - über eine Hebelanordnung 34 an den Unterlenkern 30 angreifen. Der Anstellwinkel des Anbaugeräts oder Aufsattelgerätes wird über einen hydraulischen Oberlenker verstellt, der im Prinzip durch den doppeltwirkenden Oberlenkerzylinder 12 gebildet ist, dessen Kolbenstange am Anbaugerät - im vorliegenden Fall am Pflug 32 - angreift.

Die Verstellung der Unterlenker 30 mit Bezug zum Traktorfahrgestell erfolgt über einen Regelkreis, der allgemein als elektrohydraulische Hubwerksregelung bezeichnet wird und der im Wesentlichen aus den zur Verstellung der Unterlenker 30 erforderlichen Wegeventilen 18, dem Steuergerät 20, dem Hubzylinder 8 sowie Wegaufnehmern zur Erfassung der Unterlenkerposition besteht. Bei modernen Traktoren werden bei der elektrohydraulischen Hubwerksregelung auch die auftretenden Zugkräfte erfasst, die durch einen Kraftmessbolzen aufgenommen werden, der in die Anlenkung der Unterlenker 30 ans Fahrgestell eingesetzt ist.

Die Verstellung des hydraulischen Oberlenkers 12 erfolgt über einen Oberlenkerregelkreis mit dem zugeordneten Wegeventil 18, dem Steuergerät 20, Sensoren zur Aufnahme der Oberlenkerlänge und - wie im Folgenden noch näher erläutert - Sensoren zur Aufnahme der Drücke in den Druckräumen des hydraulischen Oberlenkers. Wie im Folgenden noch detaillierter erklärt wird, kann die Bedienperson eine manuelle Verstellung des Oberlenkers 12 oder eine Änderung der Regelcharakteristik über ein in der Traktorkabine 26 angeordnetes Bedienfeld 36 bewirken. Zusätzlich sind auch am Heck des Traktors Taster 28 zur Verstellung der Oberlenkerlänge vorgesehen.

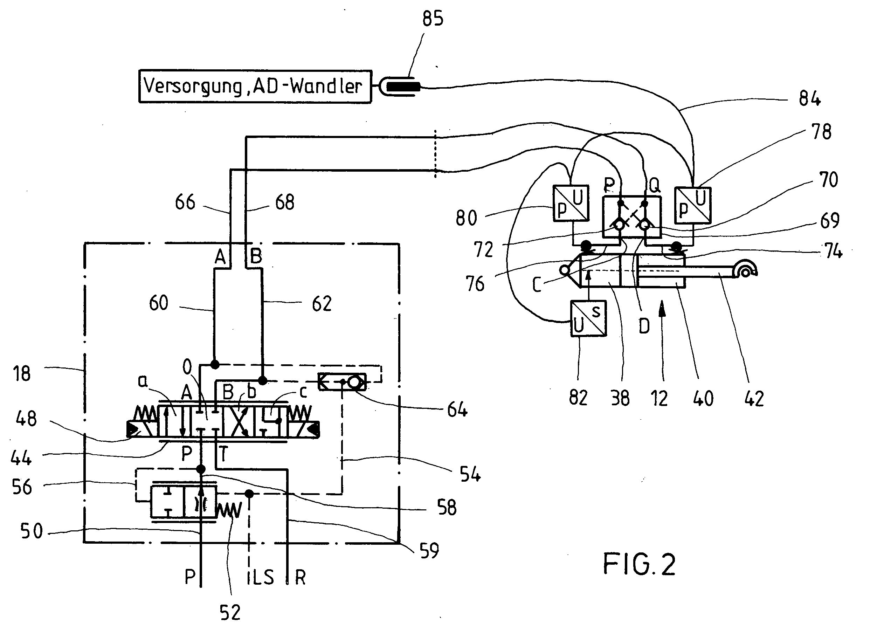

Hinsichtlich des konkreten Aufbaus einer elektrohydraulischen Hubwerksregelung zur Verstellung der Unterlenkerposition sei beispielhaft auf die eingangs genannte Patentanmeldung DE 10 2004 033 315 A1 oder auf die DE 10 2005 005 316 A1 verwiesen. Der Aufbau des Oberlenkerregelkreises zur Verstellung des hydraulischen Oberlenkers 12 wird anhand Figur 2 beschrieben. Diese zeigt einen Hydraulikschaltplan einer Schaltung, über die der hydraulische Oberlenker 12 über das Wegeventil 18 mit Druckmittel versorgbar ist, um die Oberlenkerlänge zu verstellen. Der hydraulische Oberlenker 12 ist praktisch als Hydrozylinder ausgeführt, dessen Kolben den Zylinder in einen Zylinderraum 38 und einen Ringraum 40 unterteilt. Eine Kolbenstange 42 ist an ihrem freien Endabschnitt mit einer Kupplung ausgeführt, an die das Anbau- oder Aufsattelgerät angesetzt wird. Die Druckmittelversorgung des Ober lenkers 12 erfolgt über das Wegeventil 18, das beim dargestellten Ausführungsbeispiel als vorgesteuertes, stetig verstellbares Wegeventil ausgeführt ist, wie es beispielsweise im Datenblatt RD 66 130/02.07 der Bosch Rexroth AG beschrieben ist.

Die in Figur 2 dargestellte Schaltung ist als LS-System ausgeführt. Bei derartigen LS-Systemen wird der Pumpendruck stets so eingestellt, dass er um eine vorbestimmte Druckdifferenz oberhalb des höchsten Lastdrucks der hydraulischen Verbraucher liegt. Hinsichtlich weiterer Einzelheiten derartiger LS-Systeme sei auf das genannte Datenblatt verwiesen. Prinzipiell bestehen derartige LS-Wegeventile aus einem vorgesteuerten Proportionalventil 44, dem eine LS-Druckwaage 46 zugeordnet ist. Beide Bauelemente sind üblicher Weise in eine Ventilscheibe eines Mobilsteuerblocks integriert. Bei dem dargestellten Ausführungsbeispiel erfolgt die Verstellung des Proportionalventils 44 elektrohydraulisch, beispielsweise über Druckreduzierventile 48, die über einen Proportionalmagneten verstellbar sind. Das Wegeventil 18 hat üblicher Weise einen an die Hydropumpe 14 angeschlossenen Druckanschluss P, einen LS-(Lastdruck)-Anschluss LS, einen mit dem Tank 16 verbundenen Rücklaufanschluss R sowie zwei Arbeitsanschlüsse A, B. Vom Druckanschluss P der Wegeventilscheibe führt ein Pumpenkanal 50 zum Eingangsanschluss der Druckwaage 46, die in Öffnungsrichtung von der Kraft einer Druckwaagenfeder 52 und dem Lastdruck am Oberlenker 12 beaufschlagt ist, wobei dieser Lastdruck über eine LS-Leitung 54 abgegriffen wird. Die Druckwaage 46 ist in Richtung einer Verringerung des Öffnungsquerschnitts durch den Druck am Ausgang der Druckwaage beaufschlagt, der über einen Steuerkanal 56 von einem den Ausgangsanschluss der Druckwaage 46 mit einem Eingangsanschluss P des Proportionalventils 44 verbindenden Zulaufkanal 58 abgegriffen ist.

Das Proportionalventil 44 ist über eine Zentrierfederanordnung in eine Sperrposition Null vorgespannt, in der der Druckanschluss P, ein Tankanschluss T und zwei Arbeitsanschlüsse A, B abgesperrt sind. Der Tankanschluss T ist über einen Ablaufkanal 59 mit dem Tankanschluss T verbunden. Durch Verstellen eines Ventilschiebers des Proportionalventils 44 in Richtung seiner Positionen a wird die Druckmittelverbindung zwischen dem Druckanschluss P und dem Arbeitsanschluss A sowie vom Arbeitsanschluss B zum Tankanschluss T aufgesteuert. Bei einer Verstellung in Richtung der mit b gekennzeichneten Positionen wird der Druckanschluss P mit dem Arbeitsanschluss B und entsprechend der Arbeitsanschluss A mit dem Tankanschluss T verbunden. Durch ein weiteres Verstellen des Ventilschiebers in der Darstellung gemäß Figur 2 nach links wird eine Schwimmstellung c eingestellt, bei der die beiden Arbeitsanschlüsse A, B gemeinsam mit dem Tankanschluss T verbunden sind, so dass der Oberlenker frei verstellbar ist. In dieser Schwimmstellung ist der Druckanschluss P abgesperrt.

Der Arbeitsanschluss A ist über eine Vorlaufleitung 60 mit dem Arbeitsanschluss A des Wegeventils 18 und der Arbeitsanschluss B des Proportionalventils 44 ist über einen Rücklaufanschluss 62 mit dem Arbeitsanschluss B der Wegeventilscheibe des Wegeventils 18 verbunden. Je nach Ansteuerung des Proportionalventils 44 kann selbstverständlich der Vorlaufkanal 60 auch als Rücklaufkanal 62 dienen.

Der die Druckwaage in Öffnungsrichtung beaufschlagende Lastdruck wird über ein Wechselventil 64 von den beiden Kanälen 60, 62 abgegriffen, die je nach Ansteuerung des Proportionalventils 44 im Druckmittelvorlauf oder im Druckmittelrücklauf liegen.

Durch Verstellung des Proportionalventils 44 wird eine Zulaufmessblende eingestellt, wobei über die Druckwaage 46 der Druckabfall über der Zulaufmessblende lastunabhängig konstant gehalten werden kann - dieser Druckabfall entspricht dem Druckäquivalent der Feder 52.

Die beiden Arbeitsanschlüsse A, B der Ventilscheibe sind über Arbeitsleitungen 66, 68 mit dem hydraulischen Oberlenker 12 verbunden. Beim dargestellten Ausführungsbeispiel ist dieser hydraulische Oberlenker 12 mit einem Sperrblock 69 mit zwei Sperrventilen 70, 72 ausgeführt, die vom jeweiligen Druck am Eingang des anderen Sperrventils 72, 70 entsperrbar sind. Der Sperrblock ist auf den Oberlenker 12 aufgesetzt, so das sich ein sehr kompakter Aufbau ergibt. Die beiden Arbeitsleitungen 66, 68 sind an die beiden Eingänge P, Q des Sperrblocks 69 angeschlossen, dessen Ausgangsanschlüsse C, D über Versorgungsleitungen 74, 76 mit dem Ringraum 40 bzw. dem Zylinderraum 38 verbunden sind. Der Druck in diesen Druckräumen 38, 40 wird jeweils über Drucksensoren 78, 80 und die effektive Länge des Oberlenkers 12 über einen Wegsensor 82 erfasst. Die Stromversorgung dieser Sensoren 78, 80, 82 sowie die Signalverbindung mit einem AD-Wandler erfolgt über Signaileitungen 84, die beispielsweise über Steckverbinder 84 mit dem Traktor verbunden sind. Die hydraulische Verbindung des Oberlenkers 12 mit dem Traktor kann ebenfalls über herkömmliche Schnellkuppelanschlüsse oder durch feste Verschraubungen erfolgen.

Bei dem dargestellten Ausführungsbeispiel sind die einzelnen elektronischen Komponenten wie beispielsweise die elektronischen Steuergeräte, Anzeigegeräte, Sensoren, Vorsteuerventile, etc. über ein geeignetes Bussystem beispielsweise einen CAN-Bus miteinander verbunden, so dass auch Elektronikfunktionen mit hoher Komplexität realisierbar sind.

Zum Ausfahren des Oberlenkers 12 wird beispielsweise das Proportionalventil 44 in Richtung seiner mit a gekennzeichneten Position verstellt, so dass Druckmittel über die Druckwaage 46, die aufgesteuerte Zulaufmessblende (Proportionalventil 44), den Vorlaufkanal 60, die Arbeitsleitung 66, den Sperrblock 69 zum Zylinderraum 38 strömt, so dass der Kolben des hydraulischen Oberlenkers 12 nach rechts verschoben wird und somit dessen Wirklänge vergrößert wird. Das entsprechend aus dem Ringraum 40 verdrängte Druckmittel strömt über die Versorgungsleitung 74, das vom Druck im Vorlauf aufgesteuerte Sperrventil 70, die Arbeitsleitung 68, den Rücklaufkanal 62, das Proportionalventil 44 und den Ablaufkanal 59 zum Tank 16 hin ab. Die sich dabei in den Druckräumen 38, 40 einstellenden Drücke werden über die beiden Sensoren 78, 80 erfasst und bei einer im Folgenden noch näher beschriebenen Regelung berücksichtigt. Entsprechend wird auch der Hub des Oberlenkers 12 über den Wegaufnehmer 82 erfasst und als Ist-Signal dem elektronischen Steuergerät 20 der Oberlenkerregelung zugeführt.

Ein derartiger Wegaufnehmer 82 kann beispielsweise als magnetostriktiver Positionssensor ausgeführt sein, der nach dem physikalischen Phänomen der Magnetostriktion eine berührungslose Positionsmessung ermöglicht.

Ein Vorteil der in Figur 2 dargestellten Lösung besteht darin, dass auf die üblicher Weise in die Wegeventilscheibe 18 integrierten mechanischen Sperrventile zur leckölfreien Einspannung des Oberlenkers 12 verzichtet werden kann, so dass in den Leitungen 66, 68, 60, 62 keine Drücke eingespannt sind. Der Steuerdruck in der Steuerölversorgungsleitung 98 kann abgeschaltet werden, so dass eine ungewollte Verstellung des Proportionalventils 44 verhindert werden kann.

Mit der in Figur 2 dargestellten Oberlenkeranordnung bestehen prinzipiell drei Möglichkeiten, den hydraulischen Oberlenker 12 zu verstellen.

Zum einen kann die Länge des Oberlenkers 12 manuell eingestellt werden, um die Neigung des Anbaugerätes einzustellen. Zum anderen kann das Anbaugerät bahngesteuert verfahren werden, wobei jeder Hubposition der Unterlenker 30 ein Sollwert für die Oberlenkerlänge zugeordnet ist, so dass das Anbaugerät beispielsweise im Steilaushub oder im Parallelaushub angehoben werden kann.

Die dritte Möglichkeit besteht darin, während der elektrohydraulischen Hubwerksregelung die Druckregelung des Oberlenkers zu aktivieren, so dass die Entlastung oder Belastung von Nachlaufgeräten des Anbau-/Aufsattelgerätes regelbar ist. Prinzipiell können die Bahnsteuerung und die Druckregelung auch beide aktiviert sein.

Eine Längenregelung des hydraulischen Oberlenkers 12 mit einer direkten Sollwertvorgabe ist von der Bedienperson praktisch nicht sinnvoll nutzbar, wobei die oben genannte manuelle Längeneinstellung über das Bedienfeld sicherer als eine Längenregelung ist, da beispielsweise beim Loslassen der Taster zur Betätigung des Oberlenkers - ähnlich wie bei der elektrohydraulischen Hubwerksregelung - ein sofortiger Bewegungsstopp erfolgt. Bei einer Sollwertvorgabe durch den Fahrer würde der Oberlenker in Richtung dieses Sollwertes verstellt werden. D.h. für die manuelle Längeneinstellung ist keine Längenregelung des Oberlenkers erforderlich.

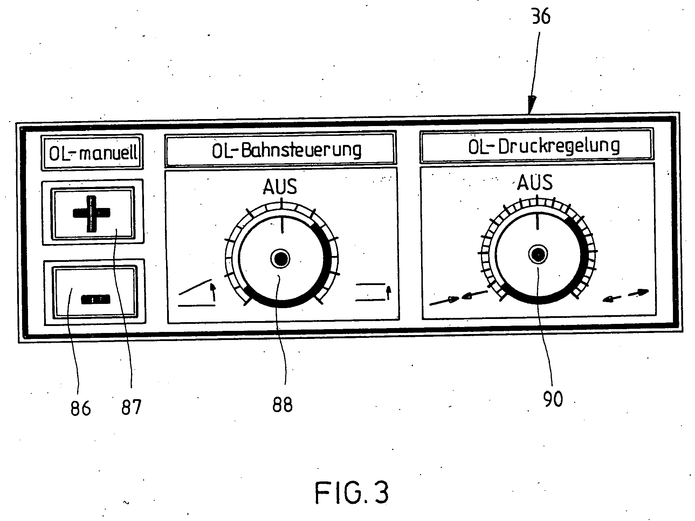

Figur 3 zeigt eine vergrößerte Darstellung des Bedienfeldes 36, das in Reichweite der Bedienperson in der Traktorkabine 26 angeordnet ist. Alternativ dazu kann ein Display mit Einstellpotentiometern und Tastern verwendet werden. Dieses Bedienfeld 36 hat im Wesentlichen drei Bedienelemente: zwei Taster 86, 87 zur manuellen Längenverstellung des Oberlenkers 12, wobei über den mit + gekennzeichneten Taster 87 die Oberlenkerlänge vergrößert und über den mit - gekennzeichneten Taster 86 die Oberlenkerlänge verkürzt wird.

Das Bedienfeld 36 hat desweiteren Betätigungselemente, beispielsweise einen Drehknopf eines Potentiometers 88, zur Aktivierung der Längenregelung des Oberlenkers 12, so dass entsprechend eine Bahnsteuerung des Hubwerks vorliegt. Durch Verdrehen des Potentiometers 88 nach links in Figur 3 wird der Oberlenker 12 während des Anhebens des Hubwerks 2 verkürzt, so dass die Steilheit des Aushubs vergrößert wird. Bei Verstellen nach rechts wird der Oberlenker 12 verlängert, so dass das Anbaugerät je nach Einstellung parallel zum Boden gehalten werden kann (Parallelaushub).

Mit einem weiteren Potentiometer 90 wird entsprechend die Druckregelung für den Oberlenker 12 aktiviert, wobei durch Verstellen des Potentiometers 90 nach links in Figur 3 mit dem Oberlenker 12 am Anbaugerät gezogen wird, während durch eine Verdrehung nach rechts mit dem Oberlenker gedrückt wird. Wie im Folgenden noch näher erklärt, können auch beide Regelungen aktiviert sein.

Die manuelle Einstellung der Oberlenkerlänge kann auch über die am Heck oder an den Kotflügeln des Traktors 1 angeordneten Taster 28 vorgenommen werden, wobei Tasterpaare der elektrohydraulischen Hubwerksregelung und andere Tasterpaare der Oberlenkerlängenverstellung zugeordnet sind. Die Funktion bzw. Wirkung dieser Taster entspricht genau den Tastern 86, 87 in Figur 3.

Für die manuelle Verstellung wird beispielsweise die +-Taste 87 betätigt, so dass der Oberlenker 12 so lange verlängert wird, wie die Taste gedrückt bleibt. Durch Betätigen der Taste 86 wird entsprechend der Oberlenker verkürzt, wobei bei Loslassen der jeweiligen Taste 86, 87 sofort die Oberlenkerbewegung stoppt. Bei Betätigen der Tasten 86, 87 wird der Volumenstromsollwert an das Proportionalventil 44 in einer Rampe langsam erhöht, wobei beispielsweise ein Anstieg auf ca. 20 l/min innerhalb von 4 sec erfolgt. Durch dieses langsame Hochregeln des Volumenstromsollwertes ist ein sehr genaues Positionieren ermöglicht. Prinzipiell ist der Bedienperson dieses rampenartige Hochfahren des Volumenstroms aus der Betätigung herkömmlicher Heck- und Fronthubwerke bekannt so dass die Oberlenkereinstellung sicher und intuitiv erfolgen kann.

In dem Fall, in dem mehrere Taster 86, 87 oder auch Taster der EHR-Hubwerksregelung gleichzeitig betätigt werden, wird kein Betätigungssignal als richtig gewertet - es erfolgt keine Verstellung des Hubwerks. Diese Verstellung kann erst durch erneutes Betätigen eines einzigen Tasters 86, 87 erfolgen.

Über die Längenregelung des Oberlenkers 12 kann das Arbeitsgerät beim Ausheben entlang einer bestimmten Bewegungsbahn geführt werden. Diese Bewegungsbahnen sind im Wesentlichen der "Steilaushub" und der "Parallelaushub". Beim Steilaushub wird der Oberlenker 12 während der Hebenbewegung der Unterlenker 30 (EHR-Regelung) verkürzt, so dass das Gerät 32 steiler am Traktor angebaut ist, als wenn keine Oberlenkerverkürzung stattgefunden hätte. Der Grad der Steilheit, d.h. das Maß, um welches sich der Oberlenker bei Lageränderung der Unterlenker 30 verkürzen soll, wird am Potentiometer 88 eingestellt. Je weiter der Potentiometer 88 nach links gedreht wird, umso steiler wird die Bewegungsbahn des Anbaugerätes 32 sein. Bei Einstellen des Potentiometers 88 in die Position AUS findet keine Längenänderung des Oberlenkers 12 während der elektrohydraulischen Hubwerksregelung statt.

Beim Parallelaushub wird entsprechend der Oberlenker 12 während des Hebens verlängert, so dass das Anbaugerät 32 flacher am Traktor 1 angebaut ist, also in dem Fall, in dem keine Oberlenkerverlängerung erfolgt. Um welches Maß das Gerät bei der jeweiligen Hubwerkshöhe flacher steht, wird am Potentiometer 88 durch Verdrehen nach rechts eingestellt. Abhängig vom Anbaugerät und von der über die elektrohydraulische Hubwerksregelung eingestellten Bahnkurve bleibt das Gerät 32 bei passender Einstellung des Potentiometers 88 parallel zum Boden.

Mit der über den Potentiometer 90 eingestellten Oberlenker-Druckregelung kann eine Achslastveränderung am Traktor und am Anbaugerät 32 erfolgen. Das Ziel dieser Druckregelung ist eine Kraftstoffeinsparung, da beispielsweise durch eine Hinterachslasterhöhung weniger Schlupf und dadurch eine höhere Fahrgeschwindigkeit und entsprechend auch eine höhere Flächenleistung, d.h. eine größere bearbeitete Fläche pro Zeiteinheit realisierbar ist und somit entsprechend weniger Kräftstoff verbraucht wird. Über die Oberlenker-Druckregelung kann eine auf das Arbeitsgerät 32 wirkende Zugkraft oder eine Druckkraft eingestellt werden, wobei die Höhe der Kraft über das Potentiometer 90 eingestellt wird. D.h. bei Verstellung des Potentiometers 90 in seine "AUS"-Position wird nicht ein Druck von 0 bar eingeregelt, sondern die Druckregelung abgeschaltet.

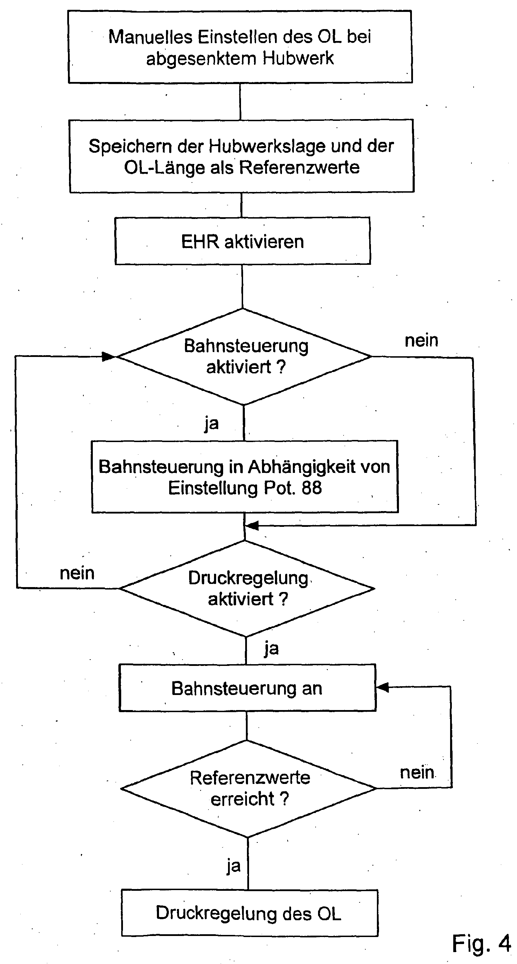

Zum besseren Verständnis wird anhand der Figuren 4 die automatische Ansteuerung des Oberlenkers 12 beispielhaft erläutert.

In einem ersten Verfahrensschritt wird das Hubwerk manuell in eine vorbestimmte Grundposition verfahren, die von der Art des Anbau-/Aufsattelgerätes abhängen kann. Üblicher Weise wird das Hubwerk 2 durch manuelle Ansteuerung der Hubzylinder 8 abgesenkt bis eine Arbeitsstellung erreicht ist. Bei Erreichen dieser Arbeitsstellung wird dann die Länge des Oberlenkers über die Taster 86, 87 manuell von der Bedienperson eingestellt und nach der Einstellung die Referenzlänge des Oberlenkers und die Hubwerkslage (mit Bezug zum Traktor 1) als Referenzwertepaar automatisch im Speicher des Steuergerätes 20 abgelegt. Somit muss der Bediener keine manuellen Vorgaben machen.

Nach dem manuellen Einstellen der zur vorbestimmten Hubwerkslage gehörenden Referenzlänge kann das Hubwerk 2 nach den verschiedenen Bedienstrategien betätigt werden. Grundsätzlich sehen diese Bedienstrategien vor, dass der Oberlenker in den Automatikfunktionen je nach Einstellung der Potentiometer 88, 90 in Abhängigkeit von der Referenzlänge bei aktivierter elektrohydraulischer Hubwerksregelung (EHR) verstellt wird. Wie bereits eingangs ausgeführt, wird über die EHR die Lage der Unterlenker 30 mit Bezug zum Traktor 1 eingestellt. Über die Oberlenker-Automatik kann - je nach gewählter Regelstrategie - die Länge des Oberlenkers (Oberlenker-Bahnsteuerung) oder der Druck am hydraulischen Oberlenker 12 geregelt werden.

Wird nun über die Bedienperson der Potentiometer 88 für die Oberlenker-Bahnsteuerung aus seiner "AUS"-Position heraus verstellt, verändert der Oberlenker 12 seine Länge, wenn das Hubwerk 2 über die EHR betätigt wird. Dabei wird in Abhängigkeit vom Abstand der aktuellen Lage der Unterlenker 30 zu der mit der Referenzlänge abgespeicherten Lage der Längensollwert des Oberlenkers 12 verändert, wobei die Größe der Längensollwertänderung bezogen auf die manuell eingestellte Referenzlänge und Referenzlage des Hubwerks über den Potentiometer 88 vorgegeben wird. D.h. bei der so genannten Oberlenker-Bahnsteuerung erfolgt eine Lageregelung der Unterlenker 30 und eine Längenregelung des Oberlenkers 12 in Abhängigkeit von der Hubwerkslage und der über den Potentiometer 88 eingestellten Kennlinie (Steilaushub/Parallelaushub).

Bei Verstellung des Potentiometers 90 zur Aktivierung der Oberlenker-Druckregelung wird die Oberlenkerlänge verstellt, um einen vorbestimmten Drucksollwert oder eine Soll-Druckdifferenz in den Druckräumen 38, 40 des Oberlenkers 12 einzustellen. Diese Druckregelung arbeitet nur während des Regelbetriebs der EHR, d.h. bei Lage-, Zugkraft oder Mischregelung der Unterlenker 30. Die Druckregelung wird sofort unterbrochen, wenn die EHR abgeschaltet ist, sich das Hubwerk in der Transportstellung befindet oder das Hubwerk verriegelt ist. Eine Unterbrechung erfolgt auch bei Betätigung der externen Taster und im Fall einer Fehlermeldung bei der Anlagensteuerung. Wie bereits eingangs beschrieben, kann über die Verstellung der Druckregelung die Achslastverteilung am Traktor und am Gerät beeinflusst werden, um das Arbeitsergebnis oder den Spritverbrauch zu optimieren.

Bei aktivierter Druckregelung wird automatisch die Bahnsteuerung aktiviert, da es sonst vorkommen kann, dass das Arbeitsgerät beim Ausheben nicht ausreichend ausgehoben oder beim Einziehen nicht richtig eingezogen wird. Die Bahnsteuerung arbeitet dann insbesondere beim Ausheben ohne Veränderung der Oberlenkerlänge, so dass keine Steil- oder Parallelaushub erfolgt.

In dem Fall, in dem der Oberlenker auf eine von der Referenzlänge abweichenden Wert verstellt ist, wird über die Bahnsteuerung der Oberlenker 12 zunächst auf die Referenzlänge eingestellt. Bei Erreichen der Hubwerkssollwertlage und der Oberlenker-Referenzlänge wird dann die Bahnsteuerung von der Druckregelung abgelöst, wobei der eingeregelte Druck über den Potentiometer 90 vorgegeben ist.

Prinzipiell kann natürlich auch die Bahnsteuerung und die Druckregelung parallel durch Verstellung der Potentiometer 88, 90 aktiviert sein; auch in diesem Fall wird die Oberlenkerlänge auf die Referenzlänge eingestellt und anschließend die Bahnsteuerung von der Druckregelung abgelöst. Diese Ablösung erfolgt in einem mehrere Sekunden dauernden kontinuierlichen Übergang. Bei einem Pflug 32 ist dies beispielsweise notwendig, da sich die hinteren Pflugschare zunächst einziehen müssen (langer Oberlenker), um vom Boden eine Kraft nach unten aufnehmen zu können. Erst dann kann man wieder am Oberlenker ziehen (kurzer Oberlenker 12), um diese Scharkräfte auf die Hinterachse des Traktors 1 leiten zu können.

Die Betriebssicherheit bei der Betätigung des Hubwerks 8 kann durch die im Folgenden beschriebenen Maßnahmen wesentlich erhöht werden, wobei es in vielen Fällen schwierig ist, die Arbeitsfunktionen von den im Folgenden beschriebenen Sicherheitsfunktionen zu trennen.

Wie bereits ausgeführt, gilt prinzipiell, dass bei einer Verriegelung des Hubwerks 2 oder bei einem Stopp der elektrohydraulischen Hubwerksregelung keine Oberlenkerbewegung zugelassen wird. Dabei kann durchaus der Potentiometer 88 aus seiner "AUS"-Position heraus bewegt sein - gemäß der Sicherheitsfunktion wird sichergestellt, dass sich der Oberlenker dann ggf. geregelt nicht bewegt.

Bei eingestellter Druckregelung am Potentiometer 90 wird eine Verstellung der Oberlenkerlänge nur in einem gewissen Längenbereich um die Referenzlänge herum erlaubt, so dass der Oberlenker 12 bei einer Druckregelung nicht den gesamten Hub durchfahren kann.

Des Weiteren ist vorgesehen, bei Überschreitung einer bestimmten Traktor-Fahrgeschwindigkeit die Druckregelung abzuschalten. Eine Aktivierung der Druckregelung ist dann nur möglich, wenn das Potentiometer 90 manuell zunächst auf "AUS" verstellt und dann wieder die gewünschte Kennlinie eingestellt wird. Dies ist erforderlich, da nach einer schnellen Fahrt des Traktors 1 und vergessener manueller Deaktivierung der Druckregelung der Pflug 32 beim Abbauen in Druckregelung übergeht und dann eine von der Bedienperson nicht erwünschte Bewegung ausführt.

In dem Fall, in dem mit den externen Tastern der EHR das Hubwerk 2 gehoben oder gesenkt wird, wird sofort die Druckregelung und/oder die Wegregelung ausgeschaltet, so dass keine Längenänderung des Oberlenkers 12 erfolgt. Von dieser Vorsichtsmaßnahme wird in einigen Sonderfällen abgewichen:
Wenn in der EHR-Transportstellung des Hubwerks 2 die EHR-Taster 28 betätigt werden, erfolgt neben der Verstellung der Unterlenker 30 auch noch die Rückstellung des Oberlenkers 12 aus Steilaushub oder Parallelaushub in die vormals manuell eingestellte Referenzlage des Oberlenkers 12. Dies ist eine einmalige Zurückstellung, die vorzugsweise auch nur beim Betätigen des EHR-Senken-Tasters erfolgt. Beim Heben erfolgt keine Bahnsteuerung mehr und die Oberlenkerlänge bleibt unverändert. Dies ist beispielsweise dann erforderlich, wenn ein steil ausgehobener Pflug 32 beim Absenken zum Abbauen steil bleibt. Dann wäre eine aufwendige manuelle Doppelverstellung von Unterlenker 30 und Oberlenker 12 notwendig. Stattdessen fährt nach der beschriebenen Sicherheitsstrategie der Oberlenker 12 zügig in seine Referenzlänge, während das Hubwerk 2 allmählich absinkt.

In dem Fall, in dem die EHR-Taster los gelassen werden, stoppt auch sofort die Verstellung des Oberlenkers 12 in die Referenzlage.

Falls das Hubwerk 2 nach erfolgter Rückstellung des Oberlenkers 12 in seine Referenzlänge mit den Tastern 28 nochmals auf- oder ab bewegt wird, wird die Oberlenkerlänge nicht mehr verändert. Es kann auch nicht ohne erneute Entriegelung der EHR in die. Druckregelung oder Bahnsteuerung des Oberlenkers 12 umgeschaltet werden.

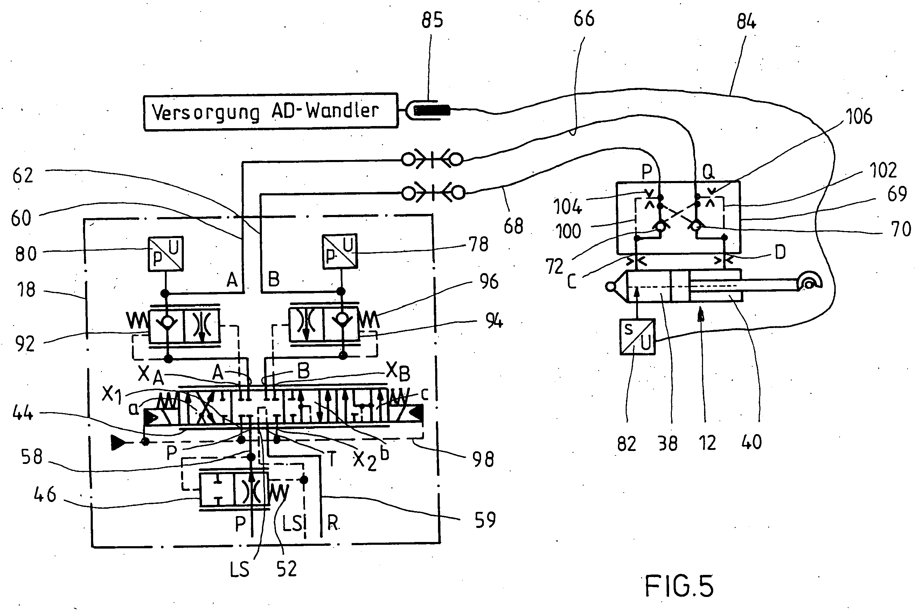

Anhand Figur 5 wird ein weiteres Ausführungsbeispiel einer Oberlenker-Automatik erläutert. Der Grundaufbau dieses Ausführungsbeispiels entspricht demjenigen aus Figur 2, so dass hier nur die wesentlichen Unterschiede erläutert werden. Auch bei der in Figur 5 dargestellten hydraulischen Schaltung erfolgt die Verstellung des hydraulischen Oberlenkers 12 über eine Wegeventilsektion 18 des Mobilsteuerblocks, die ein Proportionalventil 44 mit vorgeschalteter LS-Druckwaage 46 aufweist. Wie beim Ausführungsbeispiel gemäß Figur 2 ist die LS-Druckwaage durch die Feder 52 und den Lastdruck am Oberlenker 12 in Öffnungsrichtung und den Druck im Zulaufkanal 58, d.h. stromaufwärts der Zumessblende in Schließrichtung beaufschlagt.

Dem Proportionalventil 44 sind zwei Senkenmodule 92, 94 zugeordnet, die jeweils in ihrer federvorgespannten Grundposition als entsperrbares Rückschlagventil zur leckölfreien Einspannung des Oberlenkers 12 dienen und in einer Regelposition den vom Oberlenker 12 zurückströmenden Druckmittelvolumenstrom im Sinne einer Ablaufregelung steuern. Jeder Senkenmodul 92, 94 ist von einer Feder 96 und durch den Druck in den Vorlaufkanälen 60, 62 jeweils in Richtung der Rückschlagposition und einen Pilot- oder Steuerdruck in einer Steuerölversorgungsleitung 98 in Richtung seiner Drosselstellung beaufschlagt.

Der Druck im Druckmittelströmungspfad zwischen den Senkenmodulen 92, 94 und den Arbeitsanschlüssen A, B wird über Druckaufnehmer 78, 80 erfasst.

Der Aufbau des Proportionalventils 44, der Senkenmodule 92, 94 und der LS-Druckwaage 46 ist im Prinzip aus Anwendungen für EHR bekannt, wie sie in der DE 10 2005 005 314 A1 beschrieben sind, so dass in der vorliegenden Anmeldung nur die zum Verständnis der Erfindung wesentlichen Elemente beschrieben sind.

Das Wegeventil 44 hat einen Druckanschluss P, einen Tankanschluss T sowie zwei Ausgangsanschlüsse A, B, an die die Kanäle 60, 62 angeschlossen sind. Das Proportionalventil 44 ist des Weiteren mit zwei Steueranschlüssen X1 und X2 ausgeführt, über die der Steuerdruck in der Steuerölversorgungsleitung 98 abgegriffen werden kann. Der die Senkenmodule 92, 94 in Drosselrichtung beaufschlagende Druck wird über Steueranschlüsse XA, XB abgegriffen. In seiner federvorgespannten Grundposition sind die Anschlüsse A, B, P, T, XA, XB, X1 und X2 abgesperrt und ein LS-Anschluss mit dem Ablaufkanal 59 verbunden.

Bei Bestromen des in Figur 5 linken Vorsteuerventils 48 wird das Proprtionalventil in Richtung seiner mit a gekennzeichneten Positionen verstellt und der Druckanschluss P mit dem Arbeitsanschluss B und der Arbeitsanschluss A mit dem Tankanschluss T verbunden. Des Weiteren ist dann die Steuerölversorgungsleitung 98 mit dem Anschluss XA verbunden, so dass das Senkenmodul 92 durch den Steueröldruck in Drosselrichtung beaufschlagt ist. Die beiden Anschlüsse XB und X2 sind abgesperrt.

Bei Verstellung in Richtung der mit b gekennzeichneten Position werden entsprechend der Druckanschluss P mit dem Arbeitsanschluss A und der Arbeitsanschluss B mit dem Tankanschluss T sowie der Steueranschluss X2 mit dem Steuerausgangsanschluss XB verbunden. Die Anschlüsse XA und X1 sind abgesperrt. Dementsprechend wird dann das Senkenmodul 94 durch den Steuerdruck in der Steuerölversorgungsleitung 98 in Richtung seiner Drosselstellung beaufschlagt, um eine Ablaufregelung zu ermöglichen. Bei Verstellung des Proportionalventils 44 in Richtung der mit c gekennzeichneten Positionen wird der Oberlenker 12 in seine Schwimmstellung gebracht. Es sind alternativ dazu auch andere Wegeventile einsetzbar wie z.B. von Danfoss, PVG, Hasco. Hier werden nur zwei Sperrventile verwendet.

Ähnlich wie beim vorbeschriebenen Ausführungsbeispiel ist auf den Oberlenker 12 ein Sperrblock 69 aufgesetzt, dessen Anschlüsse P, Q an die Arbeitsleitungen 66, 68 angeschlossen sind. Wie in Figur 5 angedeutet, können diese Arbeitsleitungen 66, 68 über Schlauchkupplungen an die Traktorhydraulik angeschlossen werden.

Der Sperrblock 69 hat wiederum zwei vom Druck in der jeweils anderen Leitung entsperrbare Sperrventile 70, 72, die eine Druckmitteiströmung von den Anschlüssen P, Q zu den zugeordneten Ausgangsanschlüssen C, D des Sperrblocks 69 zulassen, so dass entsprechend die Druckräume 38, 40 mit der Pumpe oder dem Tank verbindbar sind. Der Hub des Oberlenkers 12 wird wiederum über einen Wegsensor 82 erfasst.

Bei dem dargestellten Ausführungsbeispiel ist der Sperrblock 69 mit zwei Bypassleitungen 100, 102 ausgeführt, über die im Bereich zwischen den Anschlüssen C, P und D, Q das jeweilige Sperrventil 70, 72 umgangen wird, so dass die genannten Anschlüsse über die Bypassleitungen 100, 102 und darin angeordnete Drosseln 104, 106 direkt verbunden sind. Der Querschnitt ist jedoch so ausgelegt, dass die Steuerölverluste vergleichsweise gering sind.

Im Druckmittelströmungspfad zwischen dem Sperrblock 69 und den Druckräumen 38, 40 kann bei den Ausführungsbeispielen gemäß den Figuren 2 und 5 jeweils eine weitere Drosselstelle vorgesehen werden.

Der wesentliche Unterschied zwischen den Ausführungsbeispielen gemäß den Figuren 2 und 5 besteht darin, dass beim zuletzt beschriebenen Ausführungsbeispiel die Druckaufnehmer 78, 80 traktorseitig am Wegeventil 18 vorgesehen sind, während sie bei dem Ausführungsbeispiel gemäß Figur 2 direkt am Sperrblock angeordnet werden. Die letztgenannte Lösung ist hinsichtlich der mechanischen Belastung der Druckaufnehmer 78, 80 etwas ungünstiger, da der Sperrblock 69 und der Oberlenker am Heck des Traktors äußeren Einflüssen ausgesetzt sind.

Ein weiterer Unterschied besteht darin, dass aufgrund der beiden Bypassleitungen 100, 102 beim Ausführungsbeispiel gemäß Figur 5 eine Absperrung über das Wegeventil 18 oder über sonstige zusätzliche Sperrventile erfolgen muss. Hierzu sind beim Ausführungsbeispiel gemäß Figur 5 die beiden Senkenmodule 92, 94 erforderlich. Beim Ausführungsbeispiel gemäß Figur 2 erfolgt die Absperrung leckagefrei durch die beiden Sperrventile 70, 72 des Sperrblocks 69, so dass der Oberlenker 12 leckagefrei eingespannt sind.

Vorteilhaft ist bei dem Ausführungsbeispiel gemäß Figur 2, dass bei Betätigung des Oberlenkers 12 die sich in den Druckräumen 38, 40 einstellenden Drücke exakt messbar sind, während beim Ausführungsbeispiel gemäß Figur 5 bei Ansteuerung des Oberlenkers 12 eine Verfälschung durch den über die Bypassleitungen 100, 102 geführten Teilstrom auftritt. Aufgrund dieser Bypassleitungen 100, 102 kann es auch bei einem Bruch der Arbeitsleitungen 66, 68 zu einem langsamen Einfahren oder - je nach Lastfall - Ausfahren des Oberlenkers 12 und somit zu einem Kippen des Anbaugerätes kommen.

Die manuelle Verstellung des Oberlenkers 12 und die Bahnsteuerung mit einer Längenregelung des Oberlenkers 12 erfolgt praktisch genau so wie beim vorbeschriebenen Ausführungsbeispiel. Bei der Druckregelung wird ein anderes Regelverfahren als beim vorbeschriebenen Ausführungsbeispiel eingesetzt, da - wie vorstehend erwähnt - während der Verstellung des Oberlenkers 12 eine Verfälschung der Druckmesssignale auftreten kann.

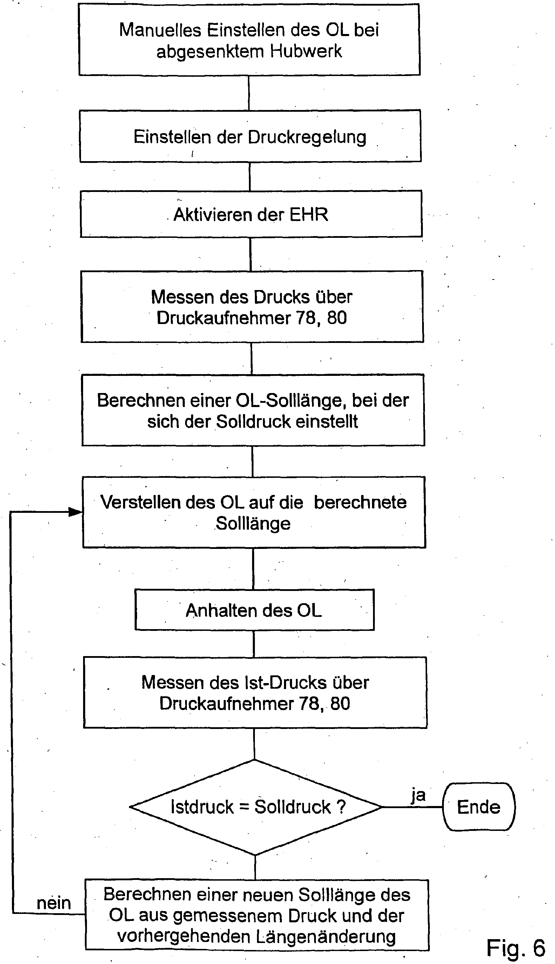

Das Grundprinzip dieses Druckregelverfahrens ist in Figur 6 dargestellt.

Zunächst wird wieder, wie beim eingangs beschriebenen Ausführungsbeispiel das Hubwerk manuell in seine Hubwerksarbeitsstellung oder sonstige Solllage gebracht und die Oberlenkerlänge manuell auf die Referenzlänge eingestellt.

Anschließend wird die Druckregelung über den Potentiometer 90 eingestellt und die elektrohydraulische Hubwerksregelung aktiviert. Bei noch still stehendem Oberlenker 12 werden dann die Drücke in den Räumen 38, 40 über die Druckaufnehmer 78, 80 gemessen.

In einem nächsten Verfahrensschritt werden aus den gemessenen Drücken in den Druckräumen 38, 40 und der aktuellen Lastrichtung (ziehende Last/drückende Last) ein Druckgradient berechnet, bei dem die Druckänderung am Oberlenker 12 in Abhängigkeit von dessen Längenänderung ermittelt wird. Aus diesem Druckgradienten kann dann diejenige Oberlenkerlänge errechnet werden, bei der sich der gewünschte Solldruck einstellt.

Der Oberlenker wird dann nach der eingangs beschriebenen Längenregelung auf den so berechneten Sollwert verstellt..

Der Druck in den Druckräumen 38, 40 stellt sich dabei innerhalb sehr kurzer Zeit über die Bypassleitungen 100, 102 auch in den Leitungsabschnitten 66, 68 und 60, 62 ein, so dass über die ins Wegeventil 18 integrierten Druckaufnehmer unverfälschte Drucksignale aufgenommen werden können. Nach einer vorbestimmten Druckausgleichzeit (etwa 1 sec) wird wiederum der Druck in den Druckräumen 38, 40 gemessen und aus der zuvor durchgeführten Längenänderung und der sich dabei einstellenden Druckänderung ein neuer Druckgradient berechnet, der mit starker Gewichtung mit dem zuvor berechneten Druckgradienten gemittelt wird.

Aus dem neuen, gemittelten Druckgradienten wird dann eine neue Oberlenkerlänge berechnet, bei der sich der gewünschte Solldruck einstellt. Dieser Zyklus wird so lange wiederholt, bis sich der gewünschte Solldruck am Oberlenker einstellt. Dabei wird ein Totband von etwa +/- 5 bar als Toleranz zugelassen.

Sollte der dann eingeregelte Druck am Oberlenker 12 im Laufe der Zeit dann wieder aus diesem Tötband herauslaufen, wird die vorbeschriebene intermittierende Druckregelung erneut gestartet.

In der Praxis zeigte es sich, dass nach zwei Regelzyklen der gewünschte Solldruck innerhalb des genannten Totbandes einstellbar ist. Die vorbeschriebene Anwendung ist insbesondere bei landwirtschaftlichen Nutzfahrzeugen ausreichend schnell und aufgrund ihrer Einfachheit und Flexibilität den eingangs beschriebenen herkömmlichen Lösungen überlegen

Offenbart sind ein Hubwerk und ein Verfahren zum Ansteuern eines Hubwerks. Dieses hat einen hydraulisch verstellbaren Oberlenker, an den ein Sperrblock angesetzt ist und einen Druckregelkreis mit Druckaufnehmern zum Erfassen des Drucks am Oberlenker.

## Patentansprüche

1. Hubwerk für ein mobiles Arbeitsgerät, insbesondere einen Traktor (1), mit zumindest einer mittels einer elektrohydraulischen Hubwerksregelung verstellbaren Unterlenkeranordnung (30) und zumindest einem druckgeregelt verstellbaren hydraulischen Oberlenker (12), dessen Druckräume (38, 40) über eine Wegeventilanordnung (18) mit einer Pumpe oder einem Tank verbindbar sind, **gekennzeichnet durch** einen am Oberlenker (12) angeordneten Sperrblock (69), der jeweils einem Druckraum (38, 40) des Oberlenkers (12) zugeordnete entsperrbare Sperrventile (70, 72) hat, wobei im Druckmittelströmungspfad zwischen den Druckräumen (38, 40) und der Wegeventilanordnung (18) Druckaufnehmer (78 ,80) zum Erfassen des Drucks im zugeordneten Druckraum (38, 40) angeordnet sind.

2. Hubwerk nach Patentanspruch 1, wobei die Wegeventilanordnung (18) ein Proportionalventil (44) hat, über das die Druckräume (38, 40) des Oberlenkers (12) mit der Pumpe oder dem Tank verbindbar sind.

3. Hubwerk nach Patentanspruch 1 oder 2, wobei die Druckaufnehmer (78, 80) im Druckmittelströmungspfad zwischen dem Sperrblock (69) und den Druckräumen (38, 40) angeordnet sind.

4. Hubwerk nach Patentanspruch 1 oder 2, mit die Sperrventile (70, 72) umgehenden Bypassleitungen (100, 102), in denen jeweils eine Drossel (104, 106) angeordnet ist.

5. Hubwerk nach Patentanspruch 4, wobei die Bypassleitungen (100, 102) und die Drosseln (104, 106) in den Sperrblock (69) integriert sind.

6. Hubwerk nach Patentanspruch 4 oder 5, wobei zwischen der Wegeventilanordnung (18) und dem Sperrblock (69) Sperrventile (92, 94) zum Einspannen des Oberlenkers (12) vorgesehen sind.

7. Hubwerk nach Patentanspruch 6, wobei die Sperrventile Senkenmodule (92, 94) der Wegeventilanordnung (18) sind.

8. Hubwerk nach einem der vorhergehenden Patentansprüche, mit einem Wegsensor (82) zum Erfassen der Oberlenkerlänge.

9. Hubwerk nach einem der Patentansprüche 2 bis 8, wobei das Proportionalventil (44) ein LS-Wegeventil eines Steuerblocks ist.

10. Verfahren zum Ansteuern eines Hubwerks (2) gemäß einem der Patentansprüche 4 bis 9 mit den Schritten:
- Erfassen des Drucks in Druckräumen (38, 40) des Oberlenkers (12);
- Berechnen einer Soll-Oberlenkerlänge in Abhängigkeit von der Lastrichtung sowie dem - erfassten Ist-Druck, wobei sich bei dieser Soll-Oberlenkerlänge der gewünschte Solldruck einstellen soll;
- Verstellen der Oberlenkerlänge auf diese Solllänge;
- Anhalten des Oberlenkers (12);
- Messen des Drucks in den Druckräumen (38, 40) des Oberlenkers (12);
- Berechnen einer neuen Soll-Oberlenkerlänge in Abhängigkeit von dem nunmehr gemessenen Ist-Druck und von der zuvor berechneten alten Soll-Oberlenkerlänge und
- Wiederholen des Zyklus bis der Solldruck am Oberlenker (12) erreicht wird.

## Claims

1. Hoisting gear for a mobile implement, in particular a tractor (1) having at least one lower linkage arrangement (30) which can be adjusted by means of an electrohydraulic hoisting gear controller, and at least one hydraulic upper linkage (12) which can be adjusted under pressure control and whose pressure spaces (38, 40) can be connected to a pump or to a tank via a directional-control valve arrangement (18), **characterized by** a check valve block (69) which is arranged on the upper linkage (12) and has releasable check valves (70, 72) which are each assigned to a pressure space (38, 40) of the upper linkage (12), wherein pressure pickups (78, 80) for detecting the pressure in the assigned pressure space (38, 40) are arranged in the pressure medium flow path between the pressure spaces (38, 40) and the directional-control valve arrangement (18).

2. Hoisting gear according to Patent Claim 1, wherein the directional-control valve arrangement (18) has a proportional valve (44) via which the pressure spaces (38, 40) of the upper linkage (12) can be connected to the pump or to the tank.

3. Hoisting gear according to Patent Claim 1 or 2, wherein the pressure pickups (78, 80) are arranged in the pressure medium flow path, between the check valve block (69) and the pressure spaces (38, 40).

4. Hoisting gear according to Patent Claim 1 or 2, having bypass lines (100, 102) which bypass the check valves (70, 72) and in each of which a throttle (104, 106) is arranged.

5. Hoisting gear according to Patent Claim 4, wherein the bypass lines (100, 102) and throttles (104, 106) are integrated into the check valve block (69).

6. Hoisting gear according to Patent Claim 4 or 5, wherein check valves (92, 94) for clamping in the upper linkage (12) are provided between the directional-control valve arrangement (18) and the check valve block (69).

7. Hoisting gear according to Patent Claim 6, wherein the check valves are sink modules (92, 94) of the directional-control valve arrangement (18).

8. Hoisting gear according to one of the preceding patent claims, having a distance sensor (82) for detecting the upper linkage length.

9. Hoisting gear according to one of Patent Claims 2 to 8, wherein the proportional valve (44) is an LS directional-control valve of a control block.

10. Method for actuating a hoisting gear (2) according to one of Patent Claims 4 to 9 having the steps:
- detecting the pressure in pressure spaces (38, 40) of the upper linkage (12);
- calculating a setpoint upper linkage length as a function of the direction of the load and the detected actual pressure, wherein the desired setpoint pressure is to be set at this setpoint upper linkage length;
- adjusting the upper linkage length to said setpoint length;
- stopping the upper linkage (12);
- measuring the pressure in the pressure spaces (38, 40) of the upper linkage (12);
- calculating a new setpoint upper linkage length as a function of the actual pressure which is now measured and of the previously calculated, old setpoint upper linkage length,
and
- repeating the cycle until the setpoint pressure is reached at the upper linkage (12).

## Revendications

1. Dispositif de levage destiné à un appareil de travail, notamment un tracteur (1), comportant au moins un système de bras de poussée inférieur (30) réglable au moyen d'un dispositif de réglage de dispositif de levage électrohydraulique et au moins un bras de poussée supérieur (12) hydraulique réglable de manière régulée en pression, dont les chambres de pression (38, 40) peuvent être reliées par l'intermédiaire d'un distributeur (18) à une pompe ou à un réservoir, **caractérisé par** un bloc de retenue (69) disposé sur le bras de poussée supérieur (12), lequel bloc de retenue comporte respectivement une vanne d'arrêt (70, 72) pouvant être débloquée et associée à une chambre de pression (38, 40) du bras de poussée supérieur (12), dans lequel des capteurs de pression (78, 80) sont disposés sur le trajet d'écoulement de fluide de pression entre les chambres de pression (38, 40) et le distributeur (18) pour détecter la pression dans la chambre de pression (38, 40) associée.

2. Dispositif de levage selon la revendication 1, dans lequel le distributeur (18) comporte une vanne proportionnelle (44) par l'intermédiaire de laquelle les chambres de pression (38, 40) du bras de poussée supérieur (12) peuvent être reliées à la pompe ou au réservoir.

3. Dispositif de levage selon la revendication 1 ou 2, dans lequel les capteurs de pression (78, 80) sont disposés sur le trajet d'écoulement de fluide de pression entre le bloc de retenue (69) et les chambres de pression (38, 40).

4. Dispositif de levage selon la revendication 1 ou 2, comprenant des conduites de dérivation (100, 102) entourant les vannes d'arrêt (70, 72) dans lesquelles est disposé un étranglement respectif (104, 106).

5. Dispositif de levage selon la revendication 4, dans lequel les conduites de dérivation (100, 102) et les étranglements (104, 106) sont intégrés au bloc de retenue (69).

6. Dispositif de levage selon la revendication 4 ou 5, dans lequel des vannes d'arrêt (92, 94) destinées à serrer le bras de poussée supérieure (12) sont prévues dans le distributeur (18) et le bloc de retenue (69).

7. Dispositif de levage selon la revendication 6, dans lequel les vannes d'arrêt sont des modules d'abaissement (92, 94) du distributeur (18).

8. Dispositif de levage selon l'une quelconque des revendications précédentes, comportant un capteur de course (82) destiné à détecter la longueur du bras de poussée supérieur.

9. Dispositif de levage selon l'une quelconque des revendications 2 à 8, dans lequel la vanne proportionnelle (44) est une vanne directionnelle LS d'un bloc de retenue.

10. Procédé de commande d'un dispositif de levage (2) selon l'une quelconque des revendications 4 à 9, comportant les étapes consistant à :
- détecter la pression régnant dans les chambres de pression (38, 40) du bras de poussée supérieur (12) ;
- calculer une longueur nominale du bras de poussée supérieur en fonction de la direction de charge ainsi que de la pression réelle détectée, dans lequel la pression nominale souhaitée doit s'établir pour ladite longueur nominale du bras de poussée supérieur ;
- régler la longueur du bras de poussée supérieur à ladite longueur nominale ;
- immobiliser le bras de poussée supérieur (12) ;
- mesurer la pression régnant dans les chambres de pression (38, 40) du bras de poussée supérieur (12) ;
- calculer une nouvelle longueur nominale du bras de poussée supérieur en fonction de la pression réelle mesurée à l'instant présent et de l'ancienne longueur nominale du bras supérieur précédemment calculée ; et
- répéter le cycle jusqu'à ce que la pression nominale soit atteinte au niveau du bras de poussée supérieur (12).
